# EUROPÄISCHE PATENTSCHRIFT

(11) **EP 1 266 925 B1**
(45) Veröffentlichungstag und Bekanntmachung des Hinweises auf die Patenterteilung: **24.03.2004**
(21) Anmeldenummer: 02010717.3
(22) Anmeldetag: 14.05.2002
(51) Int. Cl.: C08G 69/18, C08G 69/20, C08G 73/10

(54) **Flüssigkatalysator**
Liquid catalyst
Catalyseur liquide

(30) Priorität: 15.06.2001 DE 10129049
(43) Veröffentlichungstag der Anmeldung: 18.12.2002
(73) Patentinhaber: EMS-Chemie AG, 7013 Domat/Ems (CH)
(72) Erfinder: Schmid, Eduard, 7402 Bonaduz (CH); Laudonia, Ivano, 7430 Thusis (CH); Künzi, Eveline, 7013 Domat/Ems (CH)
(74) Vertreter: Pfenning, Meinig & Partner GbR

(56) Entgegenhaltungen:
- EP-A- 0 786 486
- US-A- 3 513 135
- US-A- 5 756 647
- US-A- 5 864 007
- US-A- 6 013 758

## Beschreibung

Die Erfindung betrifft Flüssigkatalysatoren (FK) für die aktivierte anionische Polymerisation von Lactamen.

Flüssigkatalysatoren für die anionische Lactampolymerisation sind bekannt.

In der DE 196 02 683 C1 und der DE 196 02 684 C1 sind lagerstabile Systeme beschrieben die sowohl den Katalysator, Aktivator und Additive enthalten. Ein ähnliches System geht auch aus der DE 196 03 305 C2 hervor.

Zur Herstellung dieser Systeme wird in einem aprotischen Lösemittel wie z.B. N-alkyliertem Säureamid bzw. N-alkyliertem Harnstoffderivat ein Aktivator für die Polymerisation von Lactam wie z.B. ein Carbodiimid, gelöst und sodann mit üblichem Katalysator für die anionische Lactampolymerisation umgesetzt. Diese Katalysatoren bestehen im allgemeinen aus Natrium-Caprolactamat gelöst in ca. vier Molteilen Caprolactam. Diese Systeme enthalten somit bis zu 80 Gew.-% unumgesetztes Lactam. Da bei der Vereinigung von Aktivator und Katalysator für die Lactampolymerisation im Lösemittel die Bedingungen für die Lactampolymerisation geschaffen sind, kann der im Katalysator enthaltene Anteil an freiem Lactam auch bei Lagertemperatur (z.B. 20-50 °C) nur langsam die anionische Lactampolymerisation eingehen, wodurch insbesondere die Viskosität der Katalysatorlösung ansteigt. Auch müssen solche Katalysatoren in vergleichsweise hohem Gewichtsanteil von z.B. 3-10 % angewendet werden.

Um diesen Nachteil zu überwinden ist in DE 197 15 679 C2 ein Verfahren zur Herstellung von Flüssigkatalysatoren beschrieben, bei dem der Katalysator, im wesentlichen Alkalilactamat, direkt in einem aprotischen Solvatisierungsmittel hergestellt und sodann mit einem Aktivator für die Lactampolymerisation umgesetzt wird. Als Aktivatoren werden dabei insbesondere Carbodiimide sowie verkappte Diisocyanate vorgeschlagen.

Wie aus den Beispielen der vorstehend erwähnten Patentschrift zu entnehmen ist, führen diese Systeme allerdings überwiegend zu einem sehr "langsamen" Polymerisationsverhalten. Zur Charakterisierung des Polymerisationsverhalten dient im wesentlichen die sogenannte Gelierzeit tᵤ, ab welcher die Viskosität der Schmelze massiv ansteigt. Diese tᵤ-Zeit, gemessen bei 200°, liegt dabei für Lactam-12 für die im vorstehend erwähnten Patent eingesetzten Flüssigkatalysatoren bei Verwendung von Carbodiimid als Aktivator im Bereich von Minuten. Solche Katalysatorsysteme eignen sich somit für Anwendungen, bei denen die Polymerisation gezielt langsam ablaufen soll. Es handelt sich hierbei z.B. um die Imprägnation von Faserstrukturen mit Bildung von Faserverbundwerkstoffen nach erfolgter Polymerisation des Lactams oder die Benetzung von Füllstoffen im Monomer-Gussprozess zwecks Verbesserung der Dimensionsstabilität.

Aus dem Offenbarungsgehalt der vorstehend erwähnten Patentschrift (Tabelle 2 und 4) ist zu entnehmen, daß bei den Systemen bei denen als Aktivator spezielle Isocyanate, nämlich verkappte Diisocyanate (System IL-6 und Lox) eingesetzt werden, dies zu einer vergleichsweise schnellen Umsetzung führt. Nachteilig hierbei ist allerdings, daß diese zu unlöslichen vernetzten Polylactamen führen, die nicht mehr umformbar sind und somit für die thermoplastischen Verarbeitungsprozesse nicht mehr geeignet sind.

Neben Gussprozessen ist neuerdings auch die kontinuierliche Lactam-Polymerisation in einem Doppelwellenextruder, z.B. einem ZSK-30, bekannt geworden und in S.K. Ha, J.L. White: Continuous Polymerization of Lauryl Lactam to PA 12, Intern. Polymer Processing XIII (1998) 2, Hanser Publishers, Munich, beschrieben. Dabei wird Lactam-12 getrennt mit käuflichem Natrium-Caprolactamat als Katalysator und N-Acetylcaprolactam als Initiator vorgemischt. Die Bedingungen der Polymerisation mit diesem System sind in der genannten Publikation umfassend dargestellt, und man erreicht im besten Fall bei einem niederen Durchsatz von 2 kg/h und einer Verweilzeit von mehreren Minuten einen Lactamumsatz von knapp 98 %.

Aufgabe der vorliegenden Erfindung ist es, ausgehend von der DE 197 15 679 C2 ein schnelles und in flüssiger Form vorliegendes Katalysatorsystem zu finden, das zu einem Umsatz von mehr als 99 % führt, wobei thermoplastisch verarbeitbare Polylactame erhalten werden sollen. Aufgabe der Erfindung ist es weiterhin, ein entsprechendes Herstellungsverfahren anzugeben.

Die Erfindung wird in bezug auf das Katalysatorsystem durch die Merkmale des Anspruchs 1 und in bezug auf das Verfahren durch die Merkmale des Anspruchs 20 gelöst. Die Unteransprüche geben bevorzugte Ausführungsformen an.

Es hat sich nun überraschenderweise gezeigt, dass spezielle Flüssigkatalysatoren (FK) die Polymerisation von Lactam (LC) ganz ausserordentlich rasch auszulösen vermögen und die Gesamtpolymerisationszeit in einem üblichen Extruder, z.B. einem ZSK-30 oder einem ZSK-25 (beides Extruder von Werner Pfleiderer, Stuttgart, wie bei S.K. Ha verwendet), bei geeignetem Schneckenpaar im Bereich von 30-200 Sekunden liegt, und wobei ein Lactamumsatz zum Polylactam von mindestens 99 Gew.-% erreicht wird.

Wesentlich ist, daß bei Verwendung der erfindungsgemäßen Flüssigkatalysatoren jeweils thermoplastisch verarbeitbares Polylactam erhalten wird.

Erfindungswesentlich beim Katalysator ist dabei die Auswahl der Isocyanate. Gemäß der Erfindung werden ausschließlich Phenylisocyanat (PIC), substituiertes Phenylisocyanat und Cyclohexylisocyanat (Cy) bzw. deren Mischungen als Isocyanat (IC) verwendet. Bei den substituierten Varianten sind diejenigen mit Alkyloder Halogen-Substituten bevorzugt. Die Isocyanate können auch in cyclisierten Strukturen (z.B. als Trimere) vorkommen (z.B. Triphenylisocyanurat).

Diese Flüssigkatalysatoren basieren somit auf speziell ausgewähltem Isocyanat (IC), umgesetzt zu mindestens 50% mit einem Lactam (LC), wobei das Umsetzungsprodukt mit einer starken Base (B) unter geeigneten Bedingungen deprotoniert ist und das resultierende Salz in einem aprotischen Solvatisierungsmittel (S) gelöst vorliegt.

Diese Flüssigkatalysatoren (FK), die von der Synthese her höchstens einen geringen Lactamüberschuss aufweisen, sind lagerstabil und lösen bei Zugabe in geringem Gewichtsanteil zu Lactamschmelze die Polymerisation des Lactams (LC) ungewohnt schnell aus, so dass, temperaturabhängig, schon nach kurzer Zeit ein Lactamumsatz von über 99 % erreicht ist.

Die Verwendung solcher Katalysatoren bringt in der Praxis viele Vorteile, wie:
- Man löst die Polymerisation ausgehend von reiner lagerstabiler Lactamschmelze durch Zugabe einer homogenen Flüssigkeit in geringem Gewichtsanteil direkt aus.
- Insbesondere kann man diesen Katalysator direkt der Lactamschmelze, die sich bereits unter Mischwirkung im Extruder befindet, kontinuierlich zudosieren. Damit lässt sich der Polymerisationsprozess ausserordentlich einfach starten.
- Während die Polymerisation von Lactam rasch auslösende bekannte Aktivatoren, wie Isocyanate und insbesondere das Phenylisocyanat, flüchtige und äusserst toxische Verbindungen sind, ist beim erfindungsgemässen Flüssigkatalysator das Isocyanat bereits mit einem Lactam "verkappt" und sodann das Proton mit Hilfe einer starken Base abgespalten, so dass ein negativ geladenes und nicht mehr flüchtiges Teilchen vorliegt, das insbesondere in Form seines Alkalisalzes gelöst in einem Solvatisierungsmittel vorliegt. Damit sind Toxizität und Umweltgefährdung weitgehend ausgeschaltet.
- Das Konzept der direkten Zugabe solch schneller Flüssigkatalysatoren mit gleichzeitiger Funktion von Katalysator und Aktivator, direkt in die bereits unter Mischwirkung stehende Lactamschmelze, wobei die Polymerisation unmittelbar ausgelöst wird und abläuft, vereinfacht die Verfahren der kontinuierlichen Lactampolymerisation ausserordentlich und erlaubt völlig neue Verfahrensvarianten.
- Es wird ein thermoplastisch verarbeitbares Polylactam erhalten.

Dass der Flüssigkatalysator mit diesen ausgewählten spezifischen Isocyanaten derart überlegene Eigenschaften, wie oben dargelegt, besitzt, war auch in Kenntnis der DE 197 15 679 C2 nicht zu erwarten. Ein Fachmann mußte gerade von der vorstehend erwähnten Patentschrift davon ausgehen, dass die Systeme mit Isocyanaten wie sie darin sehr allgemein beschrieben sind, für langsamere Reaktionen, wie z.B. zur Imprägnation von Faserstrukturen oder zur Benetzung von Füllstoffen im Monomer-Gussprozess, geeignet sind.

Da die in der DE 197 15 679 C2 offenbarten "schnellen Systeme" ausschließlich auf speziellen verkappten Diisocyanaten basierten und somit zu unlösbarem vernetztem Polylactam führten, konnte ein Fachmann auch keinerlei Anregung hieraus entnehmen, daß speziell ausgewählte Isocyanate, wie oben dargelegt, überraschende Eigenschaften aufweisen.

Als Löse- bzw. Solvatisierungsmittel (S), die weitgehend auch als Synthesemedium zur Herstellung der Flüssigkatalysatoren dienen, eignen sich insbesondere vollständig N-alkylierte lineare und cyclische Carbonsäureamide und Harnstoffe wie z.B. N-Alkylpyrrolidon und N-Alkyl-caprolactam oder der cyclische N-alkylierte Äthylen- und Propylen-Harnstoff.

Wesentlich ist, dass die Solvatisierungsmittel (S) vollständig aprotisch sind. Weitere mögliche Solvatisierungsmittel sind in DE 196 03 305 C2 aufgeführt.

Es können auch Gemische von Solvatisierungsmitteln verwendet werden.

Säureamide sind in DE 196 02 683 C1 aufgelistet, Harnstoffe sind in DE 196 02 684 C1 aufgelistet.

Als Base (B) eignen sich alle Verbindungen, die, bei geeigneter Reaktionsführung, in der Lage sind, Lactame und Carbonsäureamide zu deprotonieren bzw. bereits verkappte z.B. mit Lactam verkappte Isocyanate am Stickstoff von -NH- zu -N⁻- zu deprotonieren.

Als Base (mit Gegenion M⁺ meist Alkali- und Erdalkalimetallionen) eignet sich z.B. Na-Alkoholat, insbesondere Na-Methylat, oder Amid, z.B. Na-Amid, oder Alkylanion z.B. Butyllithium, oder auch Alkali und Erdalkali in elementarer metallischer Form, insbesondere Natriummetall, sowie Metallhydride.

Als Lactame (LC) eignen sich Lactame mit 5 bis 13 Ringgliedern und ihre Gemische, insbesondere Caprolactam und Laurinlactam.

Damit die Lactampolymerisation mit Hilfe der erfindungsgemässen Katalysatoren rasch ausgelöst wird und abläuft, muss vorteilhafterweise mindestens 50 Mol-% des Isocyanats mit Lactam umgesetzt und deprotoniert sein.

Will man aber zusätzlich die Polymerisation gezielt steuern und ablaufen lassen, so können zusätzlich ausgewählte Verkappungsmittel (V) bis zu maximal 49 Mol-% bei der Synthese mitverwendet werden. Beispiele sind insbesondere Alkohole wie z.B. Methanol sowie lineare Säureamide.

Bei den Säureamiden sind insbesondere Produkte von Interesse, die später im Polymer eine Zusatzaufgabe übernehmen können, indem sie z.B. das Polylactam gegen Bewitterungs-(UV-), Feuchte- und Hitzeeinwirkung schützen. Eine entsprechende, geeignete Verbindung ist z.B. der amidische Stabilisator Nylostab S-EED der Firma Clariant.

Der erfindungsgemässe Katalysator, ohne das Solvatisierungsmittel (S), besitzt im wesentlichen folgende allgemeine Grundstruktur I, wobei begleitend oligomere, cyclische Strukturen mit auftreten, durch deren Mitanwesenheit aber die Geschwindigkeit des Lactamumsatzes nicht wesentlich beeinträchtigt ist.

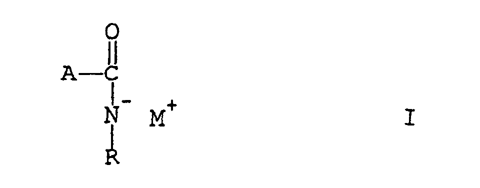

Dabei ist A die Lactamstruktur am C entsprechend 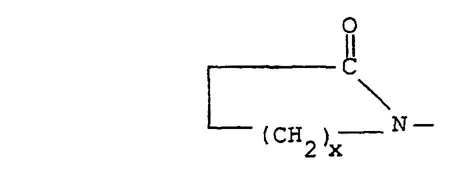 mit x = 4-11, wobei bis 49 Mol-% A von einem alternativen Verkappungsmittel (V) für Isocyanat wie Alkohol oder Carbonsäureamid abgeleitet sein kann, wobei Methylat und lineares Säureamid im Vordergrund stehen. Als lineares Säureamid eignet sich insbesondere ein Säureamid, das zusätzlich eine für das Polylactam stabilisierende Wirkung ausüben kann, wie z.B. der amidische Polyamidstabilisator Nylostab S-EED von Clariant.

Die Synthese des erfindungsgemässen Flüssigkatalysators erfolgt vorteilhafterweise direkt im aprotischen Solvatisierungsmittel (S), in welchem der Flüssigkatalysator (FK) danach gelöst bleibt.

Das zu verwendende Solvatisierungsmittel (S) wird dabei vorteilhafterweise an den gewählten Syntheseweg, sowie das verwendete Isocyanat (IC) und Lactam (LC) angepasst. Dabei kann es notwendig sein, Gemische erfindungsgemässer Solvatisierungsmittel zu verwenden.

Zur Darstellung der Katalysatoren stehen verschiedene Synthesewege zur Verfügung. In allen Fällen müssen jedoch wasserfreie Ausgangsstoffe verwendet werden, zudem ist bestmöglich unter einer trockenen Inertgasatmosphäre zu arbeiten. Die Synthesen werden im Temperaturbereich von Raumtemperatur bis 150 °C durchgeführt.

Für die Synthese kann man z.B. wie folgt vorgehen:
a) Im Solvatisierungsmittel (S) werden Lactam (LC) und gegebenenfalls weitere Verkappungsmittel (V) wie z.B. lineares Säureamid oder Alkohol gelöst. Danach wird unter Rühren und geeigneter Temperaturführung die Base (B) zugefügt und im allgemeinen unter Vakuumeinwirkung das Lactam und gegebenenfalls das weitere Verkappungsmittel deprotoniert. Danach wird bei geeigneter Temperatur das Isocyanat (IC) langsam zugefügt, wobei es mit den deprotonierten Verkappungsmitteln reagiert und der Flüssigkatalysator (FK) entsteht.
   Eine übliche Reaktionsweise verläuft z.B. so, dass man als Solvatisierungsmittel N-Octylpyrrolidon wählt, das Lactam, z.B. Lactam-6, in einem Molanteil von z.B. 60-100 % bezogen auf das Isocyanat darin löst und sodann bei geeigneter Temperaturführung und Vakuumeinwirkung das Lactam zum Lactamat deprotoniert, wofür man die Base Na-Methylat in einem Anteil von 1 Mol Methylat pro Mol Isocyanat verwendet. Dabei wird das Lactam vollständig deprotoniert und das vorhandene, überschüssige Methylat wirkt direkt als zusätzliches Verkappungsmittel.
   Dabei entstehen nebeneinander die beiden Grundstrukturen des erfindungsgemässen Flüssigkataiysators (FK) entsprechend der allgemeinen Formel I: 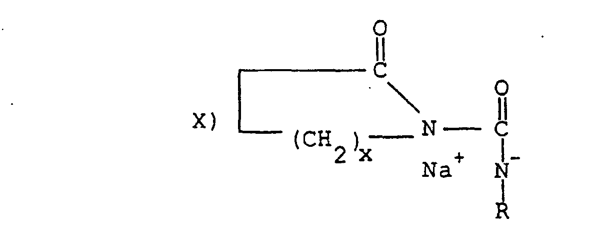 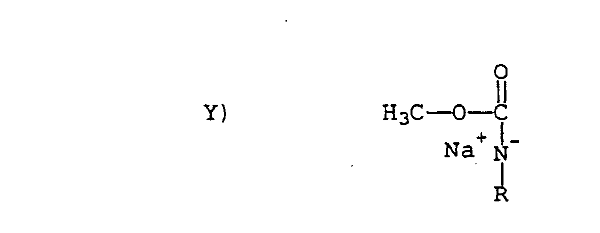
b) Man kann aber auch so vorgehen, dass direkt verkapptes Isocyanat als Ausgangsmaterial verwendet wird, man dieses im Solvatisierungsmittel löst und man danach unter geeigneter Temperaturführung und gegebenenfalls Vakuumeinwirkung mit der Base die Umsetzung zum Flüssigkatalysator durchführt.
c) Ein weiterer Syntheseweg der sich anbieten kann, ist, dass man das Isocyanat z.B. Phenylisocyanat, im Solvatisierungsmittel löst und man danach eine geringe Menge Base, wie z.B. Natriummethylat, zufügt, wodurch die Trimerisierungsreaktion des Isocyanates zum (cyclischen) Isocyanurat ausgelöst wird, die oft unter heftiger Wärmetönung abläuft. Um dabei starke Erwärmung zu verhindern, kann man alternativ etwas Base im Solvatisierungsmittel lösen und sodann das Isocyanat langsam zutropfen, wobei die Cyclisierungsreaktion unter Wärmetönung langsam abläuft und jederzeit gestoppt werden kann. Es können natürlich auch käufliche Isocyanurate direkt eingesetzt werden.
   Man kann danach zum gelösten Isocyanurat das Lactam und gegebenenfalls weitere protische Verbindungen (Verkappungsmittel), wie z.B. lineares Carbonsäureamid, zufügen und nachfolgend unter Temperaturführung und Vakuumeinwirkung das Lactam und gegebenenfalls die Verkappungsmittel deprotonieren und mit dem Isocyanurat zum Flüssigkatalysator umsetzen.

Verwendet man das in der Technik übliche Natriummethylat gelöst in Methanol, so ist wirksame Vakuumeinwirkung stets notwendig, und es ist auf vollständige Entfernung von Methanol zu achten. Bei Verwendung von elementarem Alkalimetall als Base oder bei Einsatz von starker Base wie z.B. Natriumhydrid, die zu flüchtigen Reaktionsprodukten führt, ist natürlich Vakuum nicht notwendig.

Bevorzugt wird beim Umsetzungsprozeß folgendes Molverhältnis (IC) : (B) : (LC) eingehalten:
(1) : (0,8-1,2) : (0,8-1,2)

Für den Fall, dass zusätzliches Verkappungsmittel (V) verwendet wird, ist folgendes Molverhältnis
(IC):(B):(V):(LC) bevorzugt:
(1) : (0, 9-1, 1) : (0, 4 9-0, 01) : (0, 51-1, 2)
besonders bevorzugt ist:
(1) : (1,1-0,9) : (0,1-0,01) : (0,9-1,2)

Vorteilhafterweise hält man bei der Synthese des erfindungsgemässen Flüssigkatalysators in etwa eine 1:1:1 - Stöchiometrie von Lactam und Verkappungsmittel zu Base und zur -N=C=0 - Gruppe im Isocyanat ein. Je nach gewähltem Solvatisierungsmittel können die Komponenten je auch in einem beschränkten Überschuss angewendet werden, wobei etwa folgendes gilt:
- Bei Überschuss an Lactam addiert dieses direkt an ein Flüssigkatalysator-Teilchen, wobei das primär angelagerte Lactam eine Ringöffnung erfährt.
- Überschüssige Base, z.B. Natriummethylat, ist in einem geringen Anteil in vielen Solvatisierungsmitteln löslich.
- Die üblichen aliphatischen Isocyanate trimerisieren spontan im vorhandenen, basischen pH-Bereich und verlieren dabei ihre Flüchtigkeit und weitgehend Toxizität.

In Ausnahmefällen kann nach der Flüssigkatalysator-Herstellung ein Niederschlag in geringer Menge verbleiben. Dieser kann z.B. als Folge von nicht hinreichend eingehaltenem Feuchteausschluss oder einer zu grossen Stöchiometrieabweichung oder ungeeigneter Reaktionsführung entstehen.

Es ist dann notwendig, den Flüssigkatalysator vom Niederschlag zu trennen. Der nun vorliegende Katalysator besitzt danach die übliche Aktivität.

Der erfindungsgemässe Flüssigkatalysator wird bei LC-12 (Laurinlactam) bevorzugt für den kontinuierlichen Polymerisationsprozess, z.B. in einem Extruder, insbesondere einem Doppelwellenextruder mit Zwangsförderung verwendet.

Im Gegensatz zum Katalysator-Aktivatorsystem gemäss eingangs zitierter Publikation (S.K. Ha) sowie zum Flüssigkatalysator gemäss DE 197 15 679 C2 verläuft die Polymerisation mit dem erfindungsgemässen Flüssigkatalysator ausserordentlich rasch, je nach Temperaturführung innerhalb von z.B. 30-100 Sekunden, wobei im allgemeinen Polyamid 12 mit einem Lactam-12 Restgehalt von weniger als 1 und insbesondere weniger als 0,5 Gew.-% entsteht.

Bevorzugt wird das Verfahren so durchgeführt, dass man der Polymerisation weitere Verfahrensschritte direkt anfügt. So kann man z.B. nachfolgend an die Polymerisation mit einem Äthylenacrylsäurecopolymer, das auch teilneutralisiert sein kann und weitere Comonomere enthalten kann, die Aktivität des Katalysators gezielt aufheben und sodann jede Art von Rezepturzusätzen für ein Anwendungsprodukt, wie z.B. Stabilisatoren, Farbstoffe und Pigmente, Weichmacher, Schlagzähmittel, Glas- und Kohlefasern, Antiflammmittel und Mineral allein oder in geeigneter Kombination zueinander zufügen, in das gebildete Polylactam eincompoundieren, das Compound als Strang austragen, kühlen, granulieren und trocknen, wonach ein für die Thermoplastverarbeitung zum Anwendungsprodukt geeignetes Granulat vorliegt.

Der erfindungsgemässe Flüssigkatalysator eignet sich aber auch gut für die Polymerisation von Lactam-6 (Caprolactam), wobei die Polymerisation schon bei tiefer Temperatur von z.B. 140 °C rasch abläuft, wobei direkt festes Polycaprolactam von tiefem Restmonomergehalt entsteht.

Bei tiefer Polymerisationstemperatur, z.B. 70-170 °C, können im Falle von Lactam-6 auch Gussprozesse, z.B. der Monomerguss- oder der Rotationsgussprozess, auch mit Benetzung von Verstärkungsfasern und Mineral und Kombinationen davon, erfolgreich durchgeführt werden.

Das erfindungsgemäße Flüssigkatalysatorsystem eignet sich wie beschrieben insbesondere für Polyamid 6 (PA 6) hervorragend für den Fall, daß z.B. Gebrauchsgegenstände direkt in der fertigen geometrischen Form hergestellt werden sollen. Dies ist darauf zurückzuführen, weil der relativ tiefe Schmelzpunkt von Lactam-6 (69 °C) überhaupt einen Monomerguss des flüssigen Lactams bei sehr tiefen Schmelzetemperaturen (weit unterhalb des PA 6-Schmelzpunktes von 222 °C) ermöglicht und weil zudem der sehr schnelle Flüssigkatalysator nach der Erfindung auch bei tiefen Temperaturen noch zu einer genügend schnellen Polymerisation führt. Besonders hervorzuheben hierbei ist, daß sich, wie experimentell unter Verwendung eines erfindungsgemäßen Flüssigkeitskatalysators festgestellt wurde, bei einer Polymerisationstemperatur von bis zu ca. 170 °C schon nach einigen Minuten ein LC-6-Restgehalt einstellt, der unter 1 % liegt. Zu erwähnen ist weiterhin, daß die tiefe Prozesstemperatur zusätzlich Energie spart.

Der tiefe Restmonomergehalt ist speziell bemerkenswert, da ja aus dem Stand der Technik bekannt ist (z.B. EP 0 137 884), daß sich bei der Polyamid 6-Herstellung aus Caprolactam bei ca. 275 °C immer ein Gleichgewichtsextraktanteil von ca. 10 % einstellt (davon ca. 2/3 Lactammonomer), während Polyamid für Praxisanwendungen einen Extraktgehalt von unter 1 bis 2 % haben sollte.

Mit dem erfindungsgemäßen System lassen sich diese Nachteile vermeiden und somit Gebrauchsgegenstände in der fertigen geometrischen Form aus PA 6 direkt herstellen, deren Extraktgehalt die Anforderungen erfüllt. Es ist sogar möglich, auf diese Art mit geeigneten Vorrichtungen an Stelle von Gebrauchsgegenständen kleine Pastillen zu gießen und diese auf einem Heizband oder in einer Wirbelschicht aushärten zu lassen (bei bis ca. 170 °C), um ein PA 6-Granulat zu erhalten, das im Gegensatz zum Stand der Technik (EP 0 137 884) weder extrahiert noch entmonomerisiert werden muß.

Über die Polymerisation von LC-12 direkt in einem Doppelwellenextruder mit nachfolgender Katalysatordesaktivierung und sodann Compoundierung mit Zusätzen sind direkt Granulate zugänglich, die abbaustabil in Thermoplastprozessen wie z.B. Extrusion, Spritzguss und Blasformen zu Anwendungsprodukten wie Benzinleitungen, Kabel-Ummantelungen, Monofilen, Hohlkörpern, Spritzgussteilen, die beispielsweise auch kurzglasfaserverstärkt und mineralgefüllt sein können, verarbeitbar sind.

Wird LC-6 (Caprolactam) im Gussprozess verarbeitet, bei dem verfahrensbedingt kein Desaktivator zugefügt werden kann, ist wiederum die Katalysatordesaktivierung beim Wiederaufschmelzen mit Zugabe einer sauer wirkenden Verbindung, wie Äthylenacrysäurecopolymer, möglich, wonach ein für den späteren, üblichen Thermoplastprozess geeignetes, abbaustabiles PA 6, z.B. auch ein Regranulat aus einem Recyclierprozeß, erhalten werden kann.

Die nachfolgenden Beispiele dienen zur weiteren Illustration der Erfindung.

### Beispiele

Die Erfindung soll nun anhand von Beispielen näher erläutert werden.

Dazu sind die durchgeführten Versuche in den Tabellen 1 und 2 zusammengefaßt, wobei Tabelle 1 die verwendeten Substanzen - je im gewählten Molverhältnis zueinander - und Tabelle 2 die gewählten Polymerisationsbedingungen und die Analysenergebnisse umfaßt.

In den Tabellen bedeuten:
- S: das Solvatisierungsmittel, und dabei
NOP N-Octylpyrrolidon
CyPy N-Cyclohexylpyrrolidon
DMPU der cyclische N,N'-Dimethylpropylen-Harnstoff
NMP N-Methylpyrrolidon

Alle verwendeten S-Mittel sind Produkte der Firma BASF, Ludwigshafen, D.
- V: die Verkappungsmittel für das verwendete Isocyanat, wobei bedeuten:
Ny Nylostab S-EED, ein Stabilisator für Polyamid der Firma Clariant (Huningue, FR) mit 2 Carbonamidgruppen im Molekül
MeOH Methylalkohol
LC-6 Caprolactam
LC-12 Laurinlactam
- B: die für die Deprotonierung verwendete Base, mit
NaOMe Natriummethylat als ca. 30%ige Lösung in Methanol
- IC: das verwendete Isocyanat, mit
PIC Phenylisocyanat
Cy Cyclohexylisocyanat
CPIC p-Chlorphenylisocyanat
MTIC m-Tolylisocyanat
Alle verwendeten Isocyanate sind Produkte der Bayer AG, Leverkusen, D.

In der Spalte "Molverhältnis" ist das molare Verhältnis der verwendeten Ausgangsstoffe dargestellt.

Die Spalte "Ansatz" zeigt die berechnete Ansatzgröße der Flüssigkatalysatorteilchen, je als Natriumsalz, ohne das Solvatisierungsmittel.

Die Spalte "Konz" zeigt die berechnete Konzentration dieses Teilchens in Mol pro kg der Katalysatorlösung.

In Tabelle 2 bedeuten:
- Gew.-% FK: Der Gewichtsanteil an FK, der zu 100 Teilen LC-12 zugefügt wurde,
- PG.N: die Molteile an Lactam-12, bezogen auf 1 Molteil FK-Teilchen
- T: die Temperatur, bei der polymerisiert wurde, in °C,
- t: die Polymerisationsdauer, in Min.
- LC-12,gr: die verwendete Menge an Lactamschmelze für die Polymerisation (in Gramm)

Bei den Analysenergebnissen bedeuten:
- tᵤ: die Zeit, nach der die Viskosität der aktivierten Lactamschmelze stark ansteigt. Dazu wird die Lactamschmelze in einem Erlenmeyer-Kolben mit Flüssigkatalysator versetzt, wobei Mischung mit einem Magnetrührer erfolgt. tᵤ ist nun die Zeit (in Sekunden), nach welcher der Rührer zufolge des Viskositätsanstiegs stehen bleibt und ist damit ein Maß für den Polymerisationsverlauf,
- ηᵣₑₗ: die relative Lösungsviskosität des Polylactams, gemessen als 0,5 %-ige Lösung in m-Kresol,
- DSC Max: das Schmelzpunktmaximum (Peak) des Polylactams aus der DSC-Meßkurve, in °C,
- Extrakt: der mit siedendem Methanol extrahierbare Restanteil an nicht umgesetztem Lactam, in Gew.-%.

Unter den beschriebenen möglichen Synthesewegen zur Darstellung der erfindungsgemäßen Flüssigkatalysatoren wurde für die dargestellten Beispiele folgender Syntheseweg gewählt, wobei als allgemeine Syntheseregel gilt:
- alle Ausgangsstoffe müssen wasserfrei sein, und
- es wird unter trockenem Inertgas, insbesondere in einer trockenen Stickstoffatmosphäre, gearbeitet,
- auch die Polymerisation wird sodann vorteilhafterweise unter Inertgas, insbesondere unter Stickstoff, durchgeführt.

Dabei wurde das Lactam und gegebenenfalls als V-Mittel mitverwendete Edukte im S-Mittel bei 70 bis 100 °C gelöst. Sodann wurde unter Vakuum bei 70 bis 120 °C die methanolische Natriummethylatlösung langsam zugetropft und, nachdem die gesamte NaOMe-Menge zugefügt war, die Temperatur unter Beibehaltung des Vakuums langsam angehoben. Dabei tritt meist als Zwischenstufe Niederschlagsbildung ein, der Niederschlag löst sich aber mit dem Umsatz des Lactams zum Lactamat wieder. Zur Erzielung eines möglichst vollständigen Umsatzes wurde bei einem Vakuum von ca. 20 Torr während ca. 100 Minuten bei 120 °C gerührt und die Reaktionslösung danach abgekühlt, wobei sich unterhalb von ca. 70 °C wieder ein Niederschlag bilden kann. Nun erfolgt die Zugabe des Isocyanats, wobei ein beim Abkühlen entstandener Niederschlag spontan wieder in Lösung geht und dabei der FK mit Hauptkomponente, wie mit der allgemeinen Formel I dargestellt, entsteht. Er ist eine bei Raumtemperatur viskose, dunkel gefärbte Flüssigkeit und lagerstabil ohne Aktivitätsverlust über Monate.

Eine Beurteilung des Analyseergebnisses zeigt, daß die anionische Lactampolymerisation stets außerordentlich rasch innerhalb von wenigen Sekunden ausgelöst wird.

Alle resultierenden Polymerisate besitzen ein hohes Molekulargewicht bei einem tiefen Restgehalt an nicht umgesetztem Lactam und damit auch einen hohen, für die Praxisanwendung geeigneten Schmelzpunkt.

### Polymerisationsversuche zu Tabelle 3

Entsprechend der Rezeptur zu Versuch Nr. 8 wurden in einer größeren Apparatur 500 g Flüssigkatalysator hergestellt und damit das Polymerisationsverhalten von Lactam 12 bei 180 °C Schmelzetemperatur, abhängig von der Zugabemenge, bei Gesamtpolymerisationszeiten von 10, 20 und 30 Min. durchgeführt. Identisch zu Tabelle 2 ist jeweils
(1) die relative Lösungsviskosität,
(2) das Schmelzpunktmaximum (DSC-Peak), und
(3) der Restlactamgehalt (Extrakt)

Ferner bedeutet PG.N den rechnerisch bestimmten mittleren Polymerisationsgrad. Dabei bedeuten die Zahlen 150 bis 400, daß pro aktives Flüssigkatalysatorteilchen je 150, dann 200, usw. Teilchen Lactam-12 aufgeschmolzen wurden. Diese Labortestversuche wurden bei PG.N 50 und 100 begonnen, wobei sich zeigte, daß dabei die Polymerisation so rasch abläuft, daß mit üblicher Mischtechnik, wie sie z.B. der tᵤ-Bestimmung dient, kein homogenes Einmischen von Katalysator möglich ist. Daher sind erst die Versuche ab PG.N 150 tabellarisch ausgewertet.

Ein Vergleich der ηᵣₑₗ-Werte (1) zeigt, daß diese mit zunehmendem PG.N erwartungsgemäß ansteigen.

Erstaunlicherweise zeigt sich aber zeitabhängig eine hohe Konstanz bezüglich ηᵣₑₗ. Bei (PG.N-abhängig) stets hohen ηᵣₑₗ-Werten beträgt der Abfall in ηᵣₑₗ zwischen 10 und 30 Minuten Gesamtpolymerisationszeit maximal 7 %, bezogen auf den ersten Meßwert bei 10 Min. Gesamtpolymerisationszeit.

Unerwartet hoch sind ferner die Ergebnisse zum Lactamumsatz (= 100 % minus Extraktwert).

Bei praxisüblichen Polymerisationsgraden von 150 und 200 resultiert bereits nach 10 Min. Polmerisationszeit ein Restlactamgehalt von lediglich ca. 0,20 %, der nachfolgend bis auf 0,15 % absinkt.

Selbst bei sehr hohem Polymerisationsgrad von PG.N 400 resultieren bereits nach 20 Min. Polymerisatiohszeit Restlactamgehalte von deutlich unter 1 %.

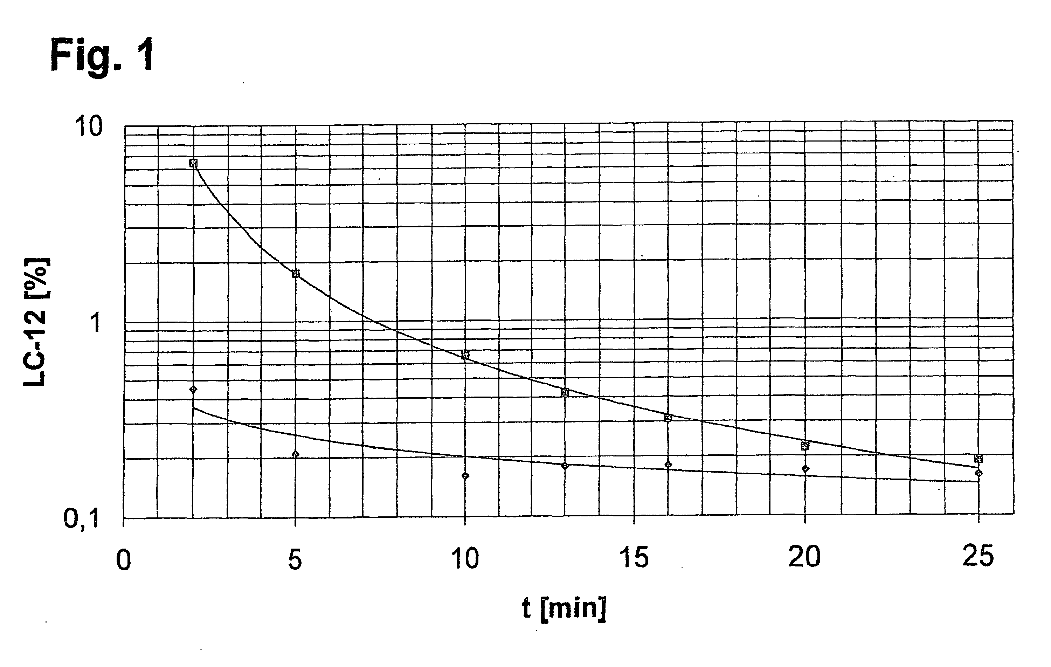

In Figur 1 ist für die Polymerisation von LC-12 mit Flüssigkatalysator die Abnahme des LC-12-Restgehaltes in Abhängigkeit von der Polymerisationszeit in logarithmischer Skala graphisch dargestellt (untere Kurve, ◆). Dazu wurde Flüssigkatalysator, wie er in Beispiel (Vs.Nr.) 7 bereitgestellt wurde, verwendet. Dieser wurde in einem Anteil entsprechend PG.N=200 eingesetzt, und die Polymerisationstemperatur betrug 200°C. Ergänzend wurde der Polymerisationsverlauf verglichen mit dem Lactamumsatz bei Verwendung eines üblichen, lactamfreien Flüssigkatalysators desselben Grundstrukturaufbaus, bei dem aber anstelle von LC-6 Methanol als Verkappungsmittel verwendet wurde (obere Kurve, ■).

Die Resultate zeigen eindrücklich, daß während den ersten und entscheidenden Minuten des Polymerisationsverlaufs der Monomerumsatz im Gegensatz zu lactamfreiem FK bereits außerordentlich hoch ist, so daß beispielsweise in einem kontinuierlichen Polymerisationsprozeß schon bei 200 °C 2 bis 5 Minuten Polymerisationszeit genügen, um ein anwendungsgeeignetes Polylactam bereit zu haben.

### Verwendung des erfindungsgemäßen Katalysators für die kontinuierliche Polymerisation auf einem Extruder

Um zu prüfen, ob sich der erfindungsgemäße FK für die kontinuierliche Lactam-12 Polymerisation auf einem Doppelwellenextruder eignet, wurde ein Technikumextruder der Firma Werner und Pfleiderer, Stuttgart, des Typs ZSK-25 mit einer üblichen Compoundierschnekke bestückt und mit einer Bohrung in Gehäuse 4 für die kontinuierliche FK-Zudosierung versehen.

Für die Versuchsdurchführung wurde dem Extrudereinzug sorgfältig getrocknetes Lactam-12 in Pillenform entsprechend einer Durchsatzleistung von 12 kg/h zugeführt und in Zone 1 bis 4 bei Temperatureinstellungen von 23, 50, 120 und 220 °C aufgeschmolzen. Danach wurde die Einstelltemperatur konstant bei 270 °C gehalten. Die Drehzahl der Extruderschnecken betrug jeweils 200 Umdrehungen pro Minute.

An speziellen Maßnahmen
- war bei Versuch 14 bis 16 in der Extrudermitte (bei Gehäuse 10) das Gehäuse nach oben geöffnet,
- wurden bei Versuch 15 die Dosierungen so geändert, daß nur die halbe Extruderlänge für die Polymerisation zur Verfügung stand, und
- bei Versuch 16 wurde die Katalysatormenge leicht erhöht.

Die Analysenergebnisse zeigen, daß der erfindungsgemäße FK ausgezeichnet für die kontinuierliche Lactampolymerisation geeignet ist (Tab. 4).

Bei für den gewählten ZSK-25 hohem Durchsatz von stets 12 kg/h resultieren tiefe Restlactamwerte, tiefer als sie für nach üblichem Verfahren der hydrolytischen Lactampolymerisation üblich sind, sowie hohe Werte der relativen Lösungsviskosität.

Der Versuch mit auf die halbe Länge verkürzter Polymerisationszone bei Versuch 15, wobei unverändert ein tiefer Restlactamgehalt resultiert, belegt, daß eine wesentliche Erhöhung des Durchsatzes möglich sein muß. Ergänzend durchgeführte Verweilzeitmessungen zeigen, daß die Verweilzeit in der Polymerisationszone für Versuch 13, 14 und 16 40 bis 50 Sekunden und bei Versuch 15 nur 25 bis 35 Sekunden beträgt.

Auch das Öffnen eines Extrudergehäuses zwecks zusätzlicher Entgasungsmöglichkeit beeinflußt die Granulatqualität nicht.

Dieses Ergebnis steht im Einklang mit der Lactamumsatzkurve entsprechend Fig. 1, wo, polymerisiert hier bei 200 °C, der Restlactamgehalt sehr viel rascher abfällt als bei Verwendung von FK entsprechend dem Stand der Technik.

Zu berücksichtigen ist bei der Wertung der erfindungsgemäßen Ergebnisse, daß z.B. S.K. Ha (früheres Literaturzitat) bei deutlich längeren Verweilzeiten lediglich auf einen LC-12 Umsatz von 94 bis 97 % kommt und dabei mit Durchsatzleistungen von lediglich 2 und 4 kg/h arbeitet.

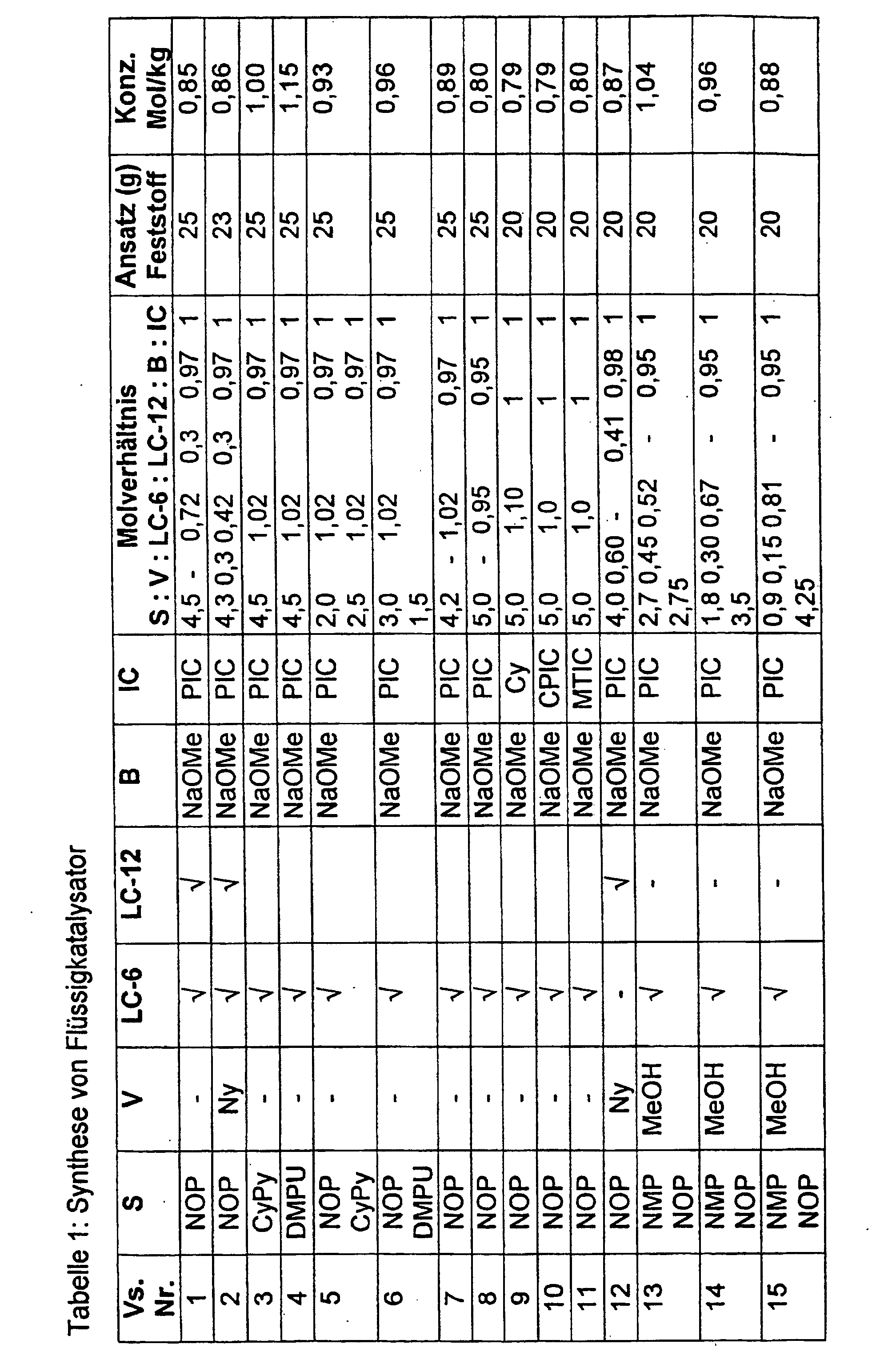

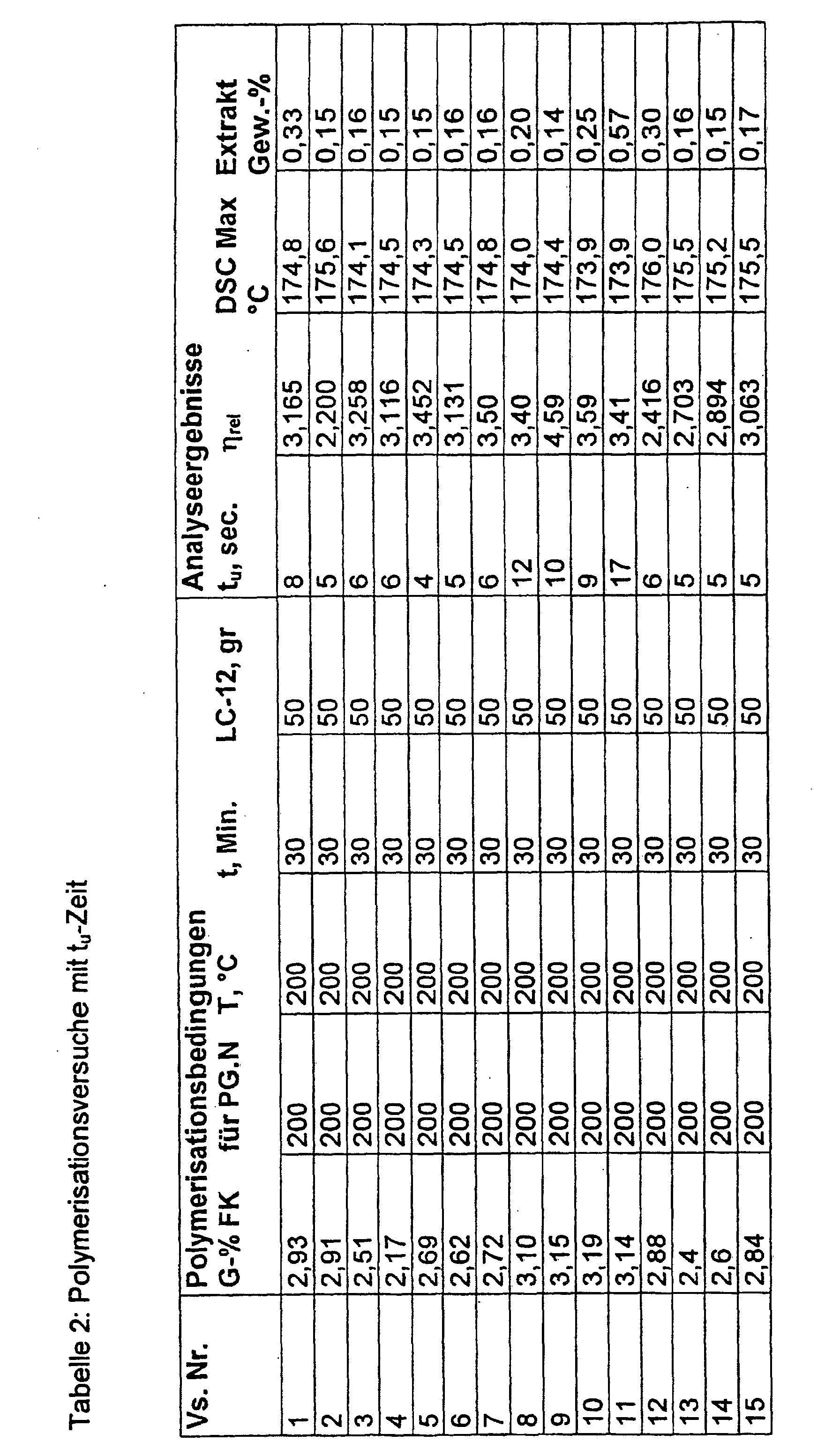

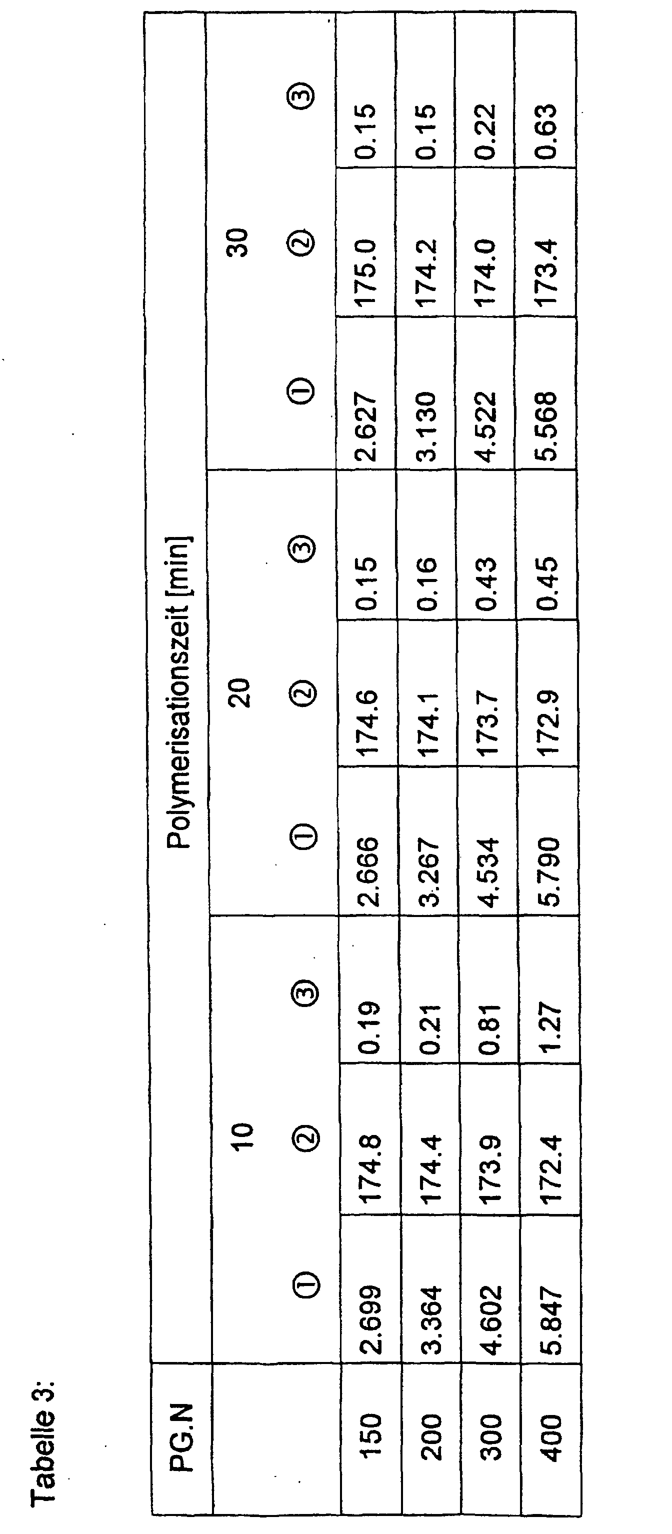

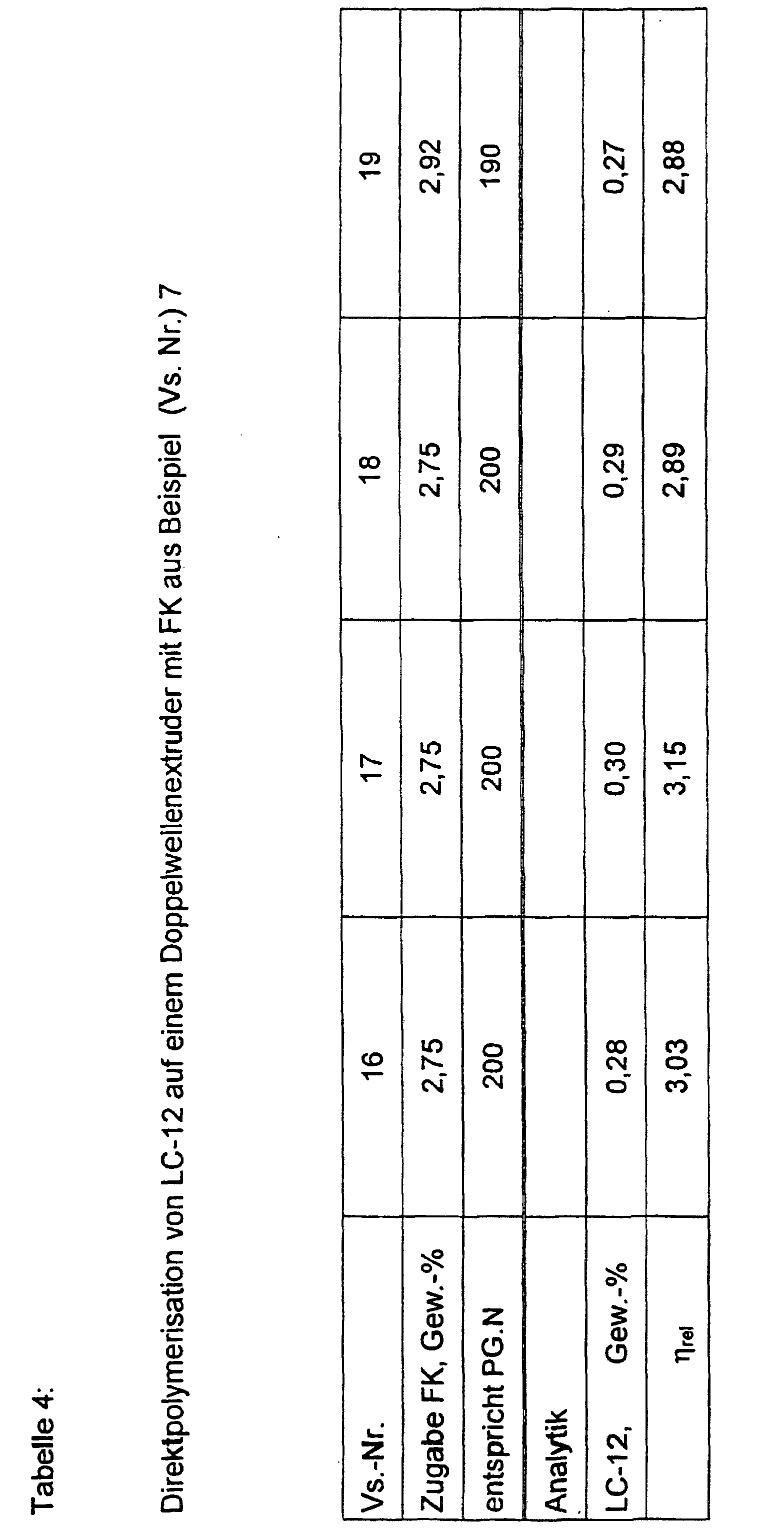

## Patentansprüche

1. Flüssigkatalysator (FK) für die Durchführung der anionischen Lactampolymerisation, enthaltend ein Umsetzungsprodukt aus einem Lactam (LC), Isocyanat (IC) und einer Base (B), wobei das Umsetzungsprodukt in einem Solvatisierungsmittel (S) gelöst vorliegt,
**dadurch gekennzeichnet,**
**daß** das Isocyanat (IC) ausgewählt ist aus Phenylisocyanat, substituiertem Phenylisocyanat, Cyclohexylisocyanat oder Mischungen hiervon.

2. Flüssigkatalysator nach Anspruch 1, **dadurch gekennzeichnet, daß** das Isocyanat vollständig oder teilweise in cyclisierter Form eingesetzt worden ist.

3. Flüssigkatalysator nach Anspruch 1 oder 2, **dadurch gekennzeichnet, daß** das Umsetzungsprodukt erhalten worden ist mit der Maßgabe, daß auf 1 Mol (IC), 0,8-1,2 Mol (B) und 0,8-1,2 Mol (LC) eingesetzt worden sind.

4. Flüssigkatalysator nach mindestens einem der Ansprüche 1 bis 3, **dadurch gekennzeichnet, daß** das Lactam (LC) mit bis zu 49 Mol-% durch ein zusätzliches Verkappungsmittel (V) ersetzt worden ist.

5. Flüssigkatalysator nach Anspruch 4, **dadurch gekennzeichnet, daß** das Umsetzungsprodukt erhalten worden ist mit der Maßgabe, daß auf 1 Mol (IC), 0,9-1,1 Mol (B), 0,49-0,01 Mol (V), und 0,51-1,2 Mol (LC) eingesetzt worden ist.

6. Flüssigkatalysator nach Anspruch 5, **dadurch gekennzeichnet, daß** das Molverhältnis
(IC) : (B) : (V) : (LC) =
(1) : (1,1-0,9) : (0,1-0,01) : (0,9-1,2) ist.

7. Flüssigkatalysator nach mindestens einem der Ansprüche 4 bis 6, **dadurch gekennzeichnet, daß** das zusätzliche Verkappungsmittel (V) ausgewählt ist aus Alkoholen mit 1-5 C-Atomen und Carbonsäureamiden.

8. Flüssigkatalysator nach Anspruch 7, **dadurch gekennzeichnet, daß** das zusätzliche Verkappungsmittel (V) Methanol ist.

9. Flüssigkatalysator nach Anspruch 7, **dadurch gekennzeichnet, daß** das Carbonsäureamid zusätzliche sterisch gehinderte Aminogruppen mit stabilisierender Wirkung enthält.

10. Flüssigkatalysator nach mindestens einem der Ansprüche 1 bis 9, **dadurch gekennzeichnet, daß** das Kation der Base (B) ein Alkali- oder Erdalkalimetallion oder Tetraalkylammonium ist und die Base ausgewählt ist aus Alkoholat, Amid, Hydrid oder Alkylanion.

11. Flüssigkatalysator nach Anspruch 10, **dadurch gekennzeichnet, daß** die Base (B) ein Alkali- oder Erdalkalialkoholat ist.

12. Flüssigkatalysator nach mindestens einem der Ansprüche 1 bis 11, **dadurch gekennzeichnet, daß** das Solvatisierungsmittel (S) eine aliphatische, cycloaliphatische oder aromatische organische Verbindung ist, die solvatisierende Strukturelemente besitzt, die keine aziden H-Atome aufweisen.

13. Flüssigkatalysator nach Anspruch 12, **dadurch gekennzeichnet, daß** das Solvatisierungsmittel (S) eine polare aprotische Verbindung ausgewählt aus der Gruppe veretherte Polyglykole, flüssige Phthalsäureester, N-alkylierte HarnstoffVerbindungen, N-alkylierte Carbonsäureamide oder deren Gemische ist.

14. Flüssigkatalysator nach Anspruch 13, **dadurch gekennzeichnet, daß** die Harnstoffverbindung ein Tetraalkylharnstoff enthaltend Reste R am N mit 1-12 C-Atomen ist, insbesondere ausgewählt aus der Gruppe Tetramethylharnstoff, Tetraethylharnstoff, Tetrabutylharnstoff oder eine cyclische Struktur gemäß der allgemeinen Formel 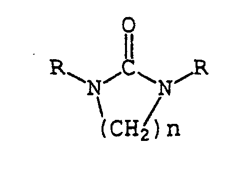 in welcher R ein Alkylrest mit 1-5 C-Atomen, insbesondere ein Methylrest ist und wobei n 2 oder 3 ist.

15. Flüssigkatalysator nach Anspruch 13, **dadurch gekennzeichnet, daß** das Solvatisierungsmittel (S) ein cyclisches 5-7 gliedriges N-alkyliertes Carbonsäureamid ist und der Alkyrest 1-12 C-Atome besitzt, wobei auch Heteroatome enthalten sein können.

16. Flüssigkatalysator nach Anspruch 13, **dadurch gekennzeichnet, daß** das Solvatisierungsmittel (S) N-Methylpyrrolidon, N-Octylpyrrolidon, N-Cyclohexylpyrrolidon, N-Octylcaprolactam oder ein Gemisch hiervon ist.

17. Flüssigkatalysator nach Anspruch 13, **dadurch gekennzeichnet, daß** das Solvatisierungsmittel (S) ein Gemisch aus Harnstoffderivat und Säureamid ist.

18. Flüssigkatalysator nach mindestens einem der Ansprüche 1 bis 17, **dadurch gekennzeichnet, daß** er zusätzlich herstellungs- und/oder verwendungsbedingte Zusätze enthält.

19. Flüssigkatalysator nach mindestens einem der Ansprüche 1 bis 18, **dadurch gekennzeichnet, daß** das Lactam (LC) ausgewählt ist aus Lactamen mit 5-13 Ringliedern, insbesondere Caprolactam und Laurinlactam oder Mischungen hiervon.

20. Verfahren zur Herstellung eines Flüssigkatalysators (FK) nach mindestens einem der Ansprüche 1 bis 19, **dadurch gekennzeichnet, daß** das Umsetzungsprodukt im Solvatisierungsmittel (S) unter Inertgas und Feuchtigkeitsausschluß im Temperaturbereich von Raumtemperatur bis 150 °C hergestellt wird, wobei niedermolekulare Lösemittel für die Base und Neutralisationsprodukte der Base, insbesondere niedermolekulare Alkohole, gegebenenfalls unter Vakuumeinwirkung entfernt werden.

21. Verfahren nach Anspruch 20, **dadurch gekennzeichnet, daß** in einem Solvatisierungsmittel (S) das Lactam (LC) und gegebenenfalls das zusätzliche Verkappungsmittel (V) mit der Base (B) umgesetzt werden, so daß das (LC) und gegebenenfalls (V) in deprotonierter Form vorliegen und man nachfolgend das Isocyanat (IC) oder direkt ein Isocyanurat, gegebenenfalls gelöst in einem Solvatisierungsmittel (S), zufügt und zum Flüssigkatalysator umsetzt.

22. Verfahren nach Anspruch 20 oder 21,**dadurch gekennzeichnet, daß** in einem vorgelagerten Verfahrensschritt das Isocyanat (IC) in einem Solvatisierungsmittel (S) einer Cyclisierung zum Isocyanurat unterzogen wird und man nachfolgend, gegebenenfalls in einem Solvatisierungsmittel (S), Lactam (LC) und gegebenenfalls ein zusätzliches Verkappungsmittel (V), sowie eine Base (B) zugibt und die Reaktionsmischung zum Flüssigkatalysator umsetzt.

23. Verfahren nach mindestens einem der Ansprüche 20 bis 22, **dadurch gekennzeichnet, daß** man in einem Anteil Solvatisierungsmittel (S), Lactam (LC) und gegebenenfalls ein zusätzliches Verkappungsmittel (V) löst und über Basenzugabe (B) in die anionische Salzform überführt und flüchtige Reaktionsprodukte sowie die Polymerisation behindernde Löse- und Solvatisierungsmittelbestandteile entfernt und man getrennt das Isocyanat (IC), gegebenenfalls in cyclisierter Form, in einem zweiten Anteil Solvatisierungsmittel (S) löst und man die Lösungen danach vereinigt und zum Flüssigkatalysator umsetzt.

24. Verfahren nach Anspruch 20 oder 22, **dadurch gekennzeichnet, daß** man das Isocyanat (IC) oder Isocyanurat dem Lactam (LC) und gegebenenfalls zusätzlichem Verkappungsmittel (V) zufügt und umsetzt und das nun verkappte Isocyanat anschließend mit Hilfe einer Base deprotoniert und so zum Flüssigkatalysator umsetzt.

25. Verfahren nach Anspruch 22, 23 oder 24, **dadurch gekennzeichnet, daß** das cyclisierte Isocyanat in der trimerisierten Form eingesetzt wird.

26. Polymergranulat herstellbar durch kontinuierliche anionische Polymerisation von Lactam mit einem Flüssigkatalysator nach mindestens einem der Ansprüche 1 bis 19.

27. Polymergranulat nach Anspruch 26, **dadurch gekennzeichnet, daß** als Lactam Lactam-6, Lactam-12 oder ihr Gemisch verwendet worden ist.

28. Polymergranulat nach Anspruch 26 oder 27, **dadurch gekennzeichnet, daß** der Lactamschmelze der Flüssigkatalysator in einem Anteil von 0,3-10 Gew.-%, bezogen auf die Lactammenge, zugefügt worden ist.

29. Polymergranulat nach Anspruch 28, **dadurch gekennzeichnet, daß** ein Flüssigkatalysator-Anteil von 0,5-3 Gew.-% verwendet worden ist.

30. Polymergranulat nach mindestens einem der Ansprüche 26 bis 29, **dadurch gekennzeichnet, daß** das Polymergranulat kontinuierlich auf einem Doppelwellenextruder hergestellt worden ist.

31. Verwendung des Flüssigkatalysators nach einem der Ansprüche 1 oder 19, zur direkten Herstellung von Granulat oder Gebrauchsgegenständen aus Polylactam in einem Prozess der Art Monomerguss, Extrusion, Schleuderguss, Spritzguss, Rotationsguss, Pultrusions-, Tauch- und Sprühverfahren, wobei der Flüssigkatalysator jeweils der Lactamschmelze zugefügt ist.

## Revendications

1. Catalyseur liquide (CL) pour effectuer la polymérisation anionique de lactame, contenant un produit de réaction obtenu à partir d'un lactame (LC), d'un isocyanate (IC) et d'une base (B), le produit de réaction se trouvant à l'état dissous dans un agent de solvatation (S), **caractérisé en ce que** l'isocyanate (IC) est choisi parmi le phénylisocyanate, un phénylisocyanate substitué, le cyclohexylisocyanate et des mélanges de ceux-ci.

2. Catalyseur liquide selon la revendication 1, **caractérisé en ce que** l'isocyanate est utilisé en partie ou en totalité sous forme cyclisée.

3. Catalyseur liquide selon la revendication 1 ou 2, **caractérisé en ce que** le produit de réaction a été obtenu avec la condition que 0,8-1,2 mole de (B) et 0,8-1,2 mole de (LC) aient été utilisées pour 1 mole de (IC).

4. Catalyseur liquide selon au moins l'une des revendications 1 à 3, **caractérisé en ce que** le lactame (LC) a été remplacé par jusqu'à 49 % en moles d'un agent de coiffage (V) supplémentaire.

5. Catalyseur liquide selon la revendication 4, **caractérisé en ce que** le produit de réaction a été obtenu avec la condition que 0,9-1,1 mole de (B), 0,49-0,01 mole de (V) et 0,51-1,2 mole de (LC) aient été utilisées pour 1 mole de (IC).

6. Catalyseur liquide selon la revendication 5, **caractérisé en ce que** le rapport molaire (IC):(B):(V):(LC) = (1):(1,1-0,9):(0,1-0,01):(0,9-1,2).

7. Catalyseur liquide selon au moins l'une des revendications 4 à 6, **caractérisé en ce que** l'agent de coiffage (V) supplémentaire est choisi parmi des alcools ayant de 1 à 5 atomes de carbone et des carboxamides.

8. Catalyseur liquide selon la revendication 7, **caractérisé en ce que** l'agent de coiffage (V) supplémentaire est le méthanol.

9. Catalyseur liquide selon la revendication 7, **caractérisé en ce que** le carboxamide comporte en outre des groupes amino stériquement encombrés qui ont un effet stabilisant.

10. Catalyseur liquide selon au moins l'une des revendications 1 à 9, **caractérisé en ce que** le cation de la base (B) est un ion alcalin ou alcalino-terreux ou tétraalkylammonium et la base est choisie parmi un alcoolate, un amide, un hydrure et un alkylanion.

11. Catalyseur liquide selon la revendication 10, **caractérisé en ce que** la base (B) est un alcoolate de métal alcalin ou alcalino-terreux.

12. Catalyseur liquide selon au moins l'une des revendications 1 à 11, **caractérisé en ce que** l'agent de solvatation (S) est un composé organique aliphatique, cycloaliphatique ou aromatique, qui présente des éléments structuraux à effet de solvatation qui ne comportent pas d'atomes d'hydrogène de fonction azide.

13. Catalyseur liquide selon la revendication 12, **caractérisé en ce que** l'agent de solvatation (S) est un composé aprotique polaire choisi dans le groupe constitué par des polyglycols éthérifiés, des esters liquides d'acide phtalique, des urées N-alkylées, des carboxamides N-alkylés et des mélanges de ceux-ci.

14. Catalyseur liquide selon la revendication 13, **caractérisé en ce que** l'urée est une tétraalkylurée contenant des radicaux R sur l'atome d'azote ayant de 1 à 20 atomes de carbone, en particulier choisie dans le groupe constitué par la tétraméthylurée, la tétraéthylurée, la tétrabutylurée et une structure cyclique de formule générale 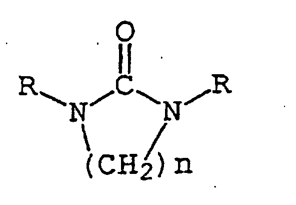 dans laquelle R est un radical alkyle ayant de 1 à 5 atomes de carbone, en particulier le radical méthyle, et n est 2 ou 3.

15. Catalyseur liquide selon la revendication 13, **caractérisé en ce que** l'agent de solvatation (S) est un carboxamide cyclique N-alkylé à 5-7 chaînons et le radical alkyle comporte 1-12 atomes de carbone, des hétéroatomes pouvant également être contenus.

16. Catalyseur liquide selon la revendication 13, **caractérisé en ce que** l'agent de solvatation (S) est la N-méthylpyrrolidone, la N-octylpyrrolidone, la N-cyclohexylpyrrolidone, le N-octylcaprolactame ou un mélange de ceux-ci.

17. Catalyseur liquide selon la revendication 13, **caractérisé en ce que** l'agent de solvatation (S) est un mélange de dérivé d'urée et d'amide.

18. Catalyseur liquide selon au moins l'une des revendications 1 à 17, **caractérisé en ce qu'**il contient en outre des additifs dus à la préparation et/ou à l'utilisation.

19. Catalyseur liquide selon au moins l'une des revendications 1 à 18, **caractérisé en ce que** le lactame (LC) est choisi parmi des lactames ayant de 5 à 13 chaînons formant le cycle, en particulier le caprolactame et le lauryllactame et des mélanges de ceux-ci.

20. Procédé pour la préparation d'un catalyseur liquide (CL) selon au moins l'une des revendications 1 à 19, **caractérisé en ce que** le produit de réaction dans l'agent de solvatation (S) est préparé sous gaz inerte et à l'abri de l'humidité, dans la plage de températures allant de la température ambiante à 150°C, des solvants de faible masse moléculaire pour la base et des produits de neutralisation de la base, en particulier des alcools de faible masse moléculaire, étant éventuellement éliminés sous l'effet d'un vide.

21. Procédé selon la revendication 20, **caractérisé en ce que** dans un agent de solvatation (S) on fait réagir avec la base (B) le lactame (LC) et éventuellement l'agent de coiffage (V) supplémentaire, de sorte que (LC) et éventuellement (V) se trouvent sous forme déprotonée, et on ajoute ensuite l'isocyanate (IC) ou directement un isocyanurate, éventuellement dissous dans un agent de solvatation (S), et on les convertit en le catalyseur liquide.

22. Procédé selon la revendication 20 ou 21, **caractérisé en ce que**, dans une étape préliminaire du procédé, on soumet l'isocyanate (IC) à une cyclisation en l'isocyanurate, dans un agent de solvatation (S), et on ajoute ensuite, éventuellement dans un agent de solvatation (S), le lactame (LC) et éventuellement un agent de coiffage (V) supplémentaire ainsi qu'une base (B) et on convertit le mélange réactionnel en le catalyseur liquide.

23. Procédé selon au moins l'une des revendications 20 à 22, **caractérisé en ce qu'**on dissout dans une partie de l'agent de solvatation (S) le lactame (LC) et éventuellement un agent de coiffage (V) supplémentaire et les on convertit en la forme anionique par addition d'une base (B) et on élimine les produits de réaction volatils ainsi que les composants solvant et agent de solvatation gênant la polymérisation, et on dissout séparément l'isocyanate (IC), éventuellement sous forme cyclisée, dans une seconde partie de l'agent de solvatation (S), et on réunit ensuite les solutions et on les convertit en le catalyseur liquide.

24. Procédé selon la revendication 20 ou 22, **caractérisé en ce qu'**on ajoute l'isocyanate (IC) ou l'isocyanurate au lactame (LC) et éventuellement à l'agent de coiffage (V) supplémentaire et on les fait réagir, et l'isocyanate désormais coiffé est ensuite déprotoné à l'aide d'une base, et ainsi converti en le catalyseur liquide.

25. Procédé la revendication 22, 23 ou 24, **caractérisé en ce que** l'isocyanate cyclisé est utilisé sous la forme trimérisée.

26. Produit granulé polymère pouvant être préparé par polymérisation anionique continue de lactame avec un catalyseur liquide selon au moins l'une des revendications 1 à 19.

27. Produit granulé polymère selon la revendication 26, **caractérisé en ce qu'**on a utilisé en tant que lactame le lactame-6, le lactame-12 ou un mélange de ceux-ci.

28. Produit granulé polymère selon la revendication 26 ou 27, **caractérisé en ce que** le catalyseur liquide a été ajouté à la masse fondue de lactame en une proportion de 0,3-10 % en poids, par rapport à la quantité de lactame

29. Produit granulé polymère selon la revendication 28, **caractérisé en ce qu'**on a utilisé une proportion de catalyseur liquide de 0,5-3 % en poids.

30. Produit granulé polymère selon au moins l'une des revendications 26 à 29, **caractérisé en ce que** le produit granulé polymère a été préparé en continu sur une extrudeuse double-vis.

31. Utilisation du catalyseur liquide selon l'une quelconque des revendications 1 à 19, pour la préparation directe de produit granulé ou la fabrication directe d'objets utilitaires à base de polylactame dans un procédé du type coulée de monomère, extrusion, moulage par centrifugation, moulage par injection, moulage par rotation, procédé de pultrusion, de trempage et de pulvérisation, le catalyseur liquide étant chaque fois ajouté à la masse fondue de lactame.

## Claims

1. Liquid catalyst (FK) for performing anionic lactam polymerisation, containing a reaction product of a lactam (LC), Isocyanate (IC) and a base (B), and the reaction product is present in a dissolved state in a solvating means (S), **characterised in that** the isocyanate (IC) is selected from phenylisocyanate, substituted phenylisocyanate, cyclohexylisocyanae or mixtures thereof.

2. Liquid catalyst according to Claim 1, **characterised in that** the isocyanate is applied fully or partially in cyclisated form.

3. Liquid catalyst according to Claim 1 or 2, **characterised in that** the reaction product is obtained provided that on 1 Mol (IC) 0.8 - 1.2 Mol (B) and 0.8 - 1.2 Mol (LC) are used.

4. Liquid catalyst according to at least one of Claims 1 to 3, **characterised in that** the lactam (LC) is replaced by up to 49 Mol-% by an additional capping means (V).

5. Liquid catalyst according to Claim 4, **characterised in that** the reaction product is obtained provided that on 1 Mol (IC) 0.9-1.1 Mol (B), 0.49 - 0.01 Mol (V) and 0.51 - 1.2 Mol (LC) are used.

6. Liquid catalyst according to Claim 5, **characterised in that** the mol ratio is
(IC) : (B) : (V) : (LC) =
(1) : (1.1 - 0.9) : (0.1 - 0.01): (0.9 - 1.2).

7. Liquid catalyst according to at least one of Claims 4 to 6, **characterised in that** that the additional capping means (V) is selected from alcohols with 1 - 5 C-atoms and carboxylic acid amides.

8. Liquid catalyst according to Claim 7, **characterised in that** the additional capping means (V) is methanol.

9. Liquid catalyst according to Claim 7, **characterised in that** the carboxylic acid amide additionally contains sterically inhibited amino groups with stabilising effect.

10. Liquid catalyst according to at least one of Claims 1 to 9, **characterised in that** the cation of the base (B) is an alkali or earthalkali metalion or tetraalkyl ammonium, and the base is selected from alcoholate, amide, hybrid or alkylanion.

11. Liquid catalyst according to Claim 10, **characterised in that** the base (B) is an alkali or earthalkali alcoholate.

12. Liquid catalyst according to at least one of Claims 1 to 11, **characterised in that** the solvation means (S) is a aliphatic, cycloaliphatic or aromatic organic compound with solvatising structure elements free from acid H-atoms.

13. Liquid catalyst according to Claim 12, **characterised in that** the solvation means (S) is a polar aprotic compound selected from the group ethered polyglycols, liquid phthalic acid ester, N-alkylised urea compounds, N-alkylised carboxyling amides or mixtures thereof.

14. Liquid catalyst according to Claim 13, **characterised in that** the urea compound is a tetraalkyl urea containing residual R on N with 1 - 12 C-atoms, In particular selected from the group tetramethyl urea, tetraethyl urea, tetrabutyl urea or a cyclic structure according to the general formula 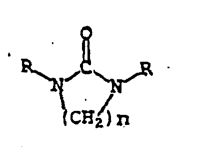 where R is an alkyl residue with 1 - 5 C-atoms, in particular a methyl residue and where N is 2 or 3.

15. Liquid catalyst according to Claim 13, **characterised in that** the solvation means (S) is a cyclic 5 - 7 sectional N-alkylised carboxylic acid amide, and the alkyl residue has 1 - 12 C-atoms, and hetero-atoms can also be included.

16. Liquid catalyst according to Claim 13, **characterised in that** the solvation means (S) is N-methylpyrrolidon, N-octylpyrrolidon, N-cyclohexylpyrrolidon, N-octylcaprolactam or a mixture thereof.

17. Liquid catalyst according to Claim 13, **characterised in that** the solvation means (S) is a mixture of urea derivative and acid amide.

18. Liquid catalyst according to at least one of Claims 1 to 17, **characterised in that** it additionally contains additives for production and/or application purposes.

19. Liquid catalyst according to at least one of Claims 1 to 18, **characterised in that** the lactam (LC) is selected from lactams with 5 - 13 circular members, in particular caprolactam and laurinlactam or mixtures thereof.

20. Process for production of a liquid catalyst (FK) according to at least one of Claims 1 to 19, **characterised in that** the reaction product in the solvating means (S) is produced under inert gas and humidity exclusion in the temperature range between room temperature and 150°C, and if appropriate, low molecular solvents for the base and neutrallsing products of the base, in particular low molecular alcohols, are removed under the effect of a vacuum.

21. Process according to Claim 20, **characterised in that** in a solvating means (S) the lactam (LC) and, if appropriate, the additional capping means (V) are reacted with the base (B) so that the (LC) and, if appropriate, (V) are present in a deprotonised form, whereafter if appropriate the isocyanate (IC) or directly an isocyanurate, if appropriate dissolved in a solvating means (S), is added and reacted to the liquid catalyst.

22. Process according to Claim 20 or 21, **characterised in that** in a forward procedural step the isocyanate (IC) is in a solvating means (S) subjected to cyclisation to isocyanurate, and subsequently, If appropriate in a solvating means (S), lactam (LC), and if appropriate an additional capping means (V) as well as a base (B) is added, and the reaction mixture is reacted to liquid catalyst.

23. Process according to at least one of Claims 20 to 22,
**characterised in that** in a proportion of solvating means (S) lactam (LC) and, if appropriate, an additional capping means (V) is dissolved and via base addition (B) transferred into the anionic form of salt and volatile reaction products as well as the polymerisation inhibiting solving and solvating means portions are removed, and separately therefrom the isocyanate (IC), if appropriate in cyclised form, is dissolved in a second proportion of solvating means (S), and the solutions are then combined and reacted to liquid catalyst.

24. Process according to Claim 20 or 22, **characterised in that** the isocyanate (IC) or isocyanurate is added to the lactam (LC) and, if appropriate, to additional capping means (V) and reacted, and the now capped isocyanate is subsequently deprotonised with the aid of a base and thus reacted to the liquid catalyst.

25. Process according to Claim 22, 23 or 24, **characterised in that** the cyclised isocyanate is used in a trimerised form.

26. Polymer granulate produced by continuous anionic polymerisation of lactam with a liquid catalyst according to at least one of Claims 1 to 19.

27. Polymer granulate according to Claim 26, **characterised in that** the lactam used is lactam-6, lactam-12 or a mixture thereof.

28. Polymer granulate according to Claim 26 or 27, **characterised in that** to the lactam melt is added the liquid catalyst at a ratio of 0.3 - 10 weight-% relative to the lactam volume.

29. Polymer granulate according to Claim 28, **characterised in that** a liquid catalyst proportion of 0.5 - 3 weight-% is used.

30. Polymer granulate according to at least one of Claims 26 to 29, **characterised in that** the polymer granulate is continuously produced on a double-shaft extruder.

31. Use of the liquid catalyst according to one of Claims 1 or 19 for direct production of granulate or commodities of polylactam in a process of the type of monomer casting, extrusion, centrifugal casting, injection casting, rotary casting, pultrusion, immersion and spraying processes, and the liquid catalyst is respectively added to the lactam melt.
